# EUROPEAN PATENT APPLICATION

(11) **EP 4 478 170 A1**
(43) Date of publication of application: **18.12.2024**
(21) Application number: 23763749.1
(22) Date of filing: 03.03.2023
(51) Int. Cl.: G06F 3/04886, G06F 3/04842, G06F 3/04847, G06F 3/0485, G06F 9/451, G06F 1/16

(54) **ELECTRONIC DEVICE FOR CONTROLLING SCREEN COMPRISING VIRTUAL KEYPAD AND METHOD FOR CONTROLLING SAME**

(30) Priority: 04.03.2022 KR 20220027897; 21.03.2022 KR 20220034987
(71) Applicant: Samsung Electronics Co., Ltd, Suwon-si, Gyeonggi-do 16677 (KR)
(72) Inventor: KIM, Moonjeong, Suwon-si, Gyeonggi-do 16677 (KR); JO, Donghyun, Suwon-si, Gyeonggi-do 16677 (KR); KIM, Youngrog, Suwon-si, Gyeonggi-do 16677 (KR); LEE, Changhan, Suwon-si, Gyeonggi-do 16677 (KR); KIM, Raetae, Suwon-si, Gyeonggi-do 16677 (KR); KIM, Moonsun, Suwon-si, Gyeonggi-do 16677 (KR); JEONG, Hoyoung, Suwon-si, Gyeonggi-do 16677 (KR)
(74) Representative: HGF
(86) International application number: PCT/KR2023/002959
(87) International publication number: WO 2023/167551

(57) **Abstract**

Disclosed are an electronic device for controlling a screen comprising a virtual keypad and a method for controlling same. An electronic device according to one embodiment of the present document may be configured to: display a first screen including at least one text input field on a flexible display in a state where at least a portion of a second housing is inserted into a first housing; acquire a first user input for the at least one text input field; display a second screen including at least one virtual keypad on the flexible display on the basis of the acquisition of the first user input, wherein the at least one virtual keypad overlaps at least a portion of the at least one text input field; display a third screen different from the second screen on the flexible display on the basis of the at least one virtual keypad overlapping the at least a portion of the at least one text input field; detect that the second housing moves in a second direction in a state where the third screen is displayed; and display a fourth screen including the at least one virtual keypad on the flexible display on the basis of the detection that the second housing moves in the second direction.

## Description

### [Technical Field]

The disclosure relates to an electronic device for controlling a screen including a virtual keypad and a method for controlling the same.

### [Background Art]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through electronic devices are evolving more and more.

### [Detailed Description of the Invention]

### [Technical Problem]

In an electronic device (e.g., an electronic device including a flexible display) having a resizable exposure area of a display, a virtual keypad may overlap a text input field according to a resizing of the exposure area of the display, rendering it difficult to identify the content (e.g., text) being currently entered by the user. For example, in the extended state (e.g., fully open state) of the electronic device, the text input field does not overlap the virtual keypad, so that the user may easily identify the text being entered to the text input field. However, in the shrunken state (e.g., fully closed state) of the electronic device, the text input field may overlap the virtual keypad, making it difficult for the user to identify the text being entered to the text input field. To that end, the user may be required to perform additional scrolling on the screen to identify the text being entered or, depending on the layout, scrolling on the screen may be impossible. In such a case, the usability of the electronic device having a resizable exposure area of the display may be significantly lowered.

According to an embodiment of the disclosure, there may be provided an electronic device that controls the screen to allow the user to easily identify characters not shown to the user by being overlapped by the virtual keypad when the virtual keypad overlaps the text input field as the electronic device including a flexible display is in a closed state.

According to an embodiment of the disclosure, there may be provided a method for controlling an electronic device to control the screen to allow the user to easily identify characters not shown to the user by being overlapped by the virtual keypad when the virtual keypad overlaps the text input field as the electronic device including a flexible display is in a closed state.

### [Technical Solution]

An electronic device according to an embodiment of the disclosure may comprise a first housing, a second housing disposed to be movable with respect to the first housing and overlapping at least a portion of the first housing, at least one processor disposed inside the second housing, and a flexible display at least partially mounted on a surface of the second housing and at least partially exposed to an outside of the electronic device. The flexible display may be at least partially inserted into the first housing based on the second housing being moved in a first direction with respect to the first housing, and being drawn out of the first housing based on the second housing being moved in a second direction with respect to the first housing. The at least one processor may be configured to display, on the flexible display, a first screen including at least one text input field in a state in which at least a portion of the second housing is inserted in the first housing, obtain a first user input to the at least one text input field, display, on the flexible display, a second screen including at least one virtual keypad based on obtaining the first user input, the at least one virtual keypad overlapping at least a portion of the at least one text input field, display, on the flexible display, a third screen different from the second screen, based on the at least one virtual keypad overlapping the at least the portion of the at least one text input field, detect the movement of the second housing in the second direction in a state in which the third screen is displayed, and display, on the flexible display, a fourth screen including the at least one virtual keypad based on detecting the movement of the second housing in the second direction. The at least one virtual keypad displayed on the fourth screen may not overlap the at least one text input field.

A method for controlling an electronic device according to an embodiment of the disclosure may comprise displaying, on the flexible display, a first screen including at least one text input field in a state in which at least a portion of the second housing is inserted in the first housing, obtaining a first user input to the at least one text input field, displaying, on the flexible display, a second screen including at least one virtual keypad based on obtaining the first user input, the at least one virtual keypad overlapping at least a portion of the at least one text input field, displaying, on the flexible display, a third screen different from the second screen, based on the at least one virtual keypad overlapping the at least the portion of the at least one text input field, detecting the movement of the second housing in the second direction in a state in which the third screen is displayed, and displaying, on the flexible display, a fourth screen including the at least one virtual keypad based on detecting the movement of the second housing in the second direction. The at least one virtual keypad displayed on the fourth screen may not overlap the at least one text input field.

### [Advantageous Effects]

According to an embodiment of the disclosure, there may be provided an electronic device that controls the screen to allow the user to easily identify characters not shown to the user by being overlapped by the virtual keypad when the virtual keypad overlaps the text input field as the electronic device including a flexible display is in a closed state.

The effects set forth herein are not limited thereto, and it is apparent to one of ordinary skill in the art that various effects may be disclosed herein.

### [Brief Description of Drawings]

FIG. 1A is a view illustrating a closed state of an electronic device according to various embodiments of the disclosure;
FIG. 1B is a view illustrating an open state of the electronic device of FIG. 1A;
FIG. 1C is a view illustrating a rear surface of the electronic device of FIG. 1A;
FIG. 2 is a view illustrating an example in which a text input field is overlapped (e.g., hidden) by a virtual keypad as a portable device according to the prior art switches from an open state to a closed state;
FIG. 3 is a view illustrating an example function or operation of controlling a screen including a virtual keypad by an electronic device to allow a user to identify at least one character entered to a text input field overlapped by the virtual keypad according to an embodiment of the disclosure;
FIG. 4 is a view illustrating an example function or operation of receiving a user input through a text input field according to an embodiment of the disclosure;
FIGS. 5A, 5B, and 5C are views illustrating an example third screen including a virtual keypad whose transparency is changed by a user's input according to an embodiment of the disclosure;
FIGS. 6A and 6B are views illustrating an example third screen including a preview pop-up window according to an embodiment of the disclosure;
FIGS. 7A and 7B are views illustrating a third screen including a guide message to guide to scroll a screen overlapped by a virtual keypad according to a user input according to an embodiment of the disclosure;
FIGS. 8A and 8B are views illustrating an example third screen including an indicator and an extend guide message to indicate that a second housing (e.g., a first structure) should be moved to show at least one text input field overlapped by at least one keypad;
FIG. 8C is a view illustrating an example function or operation in which a text input field overlapped by a virtual keypad is shown as an electronic device turns into an open state as a second housing moves according to an embodiment of the disclosure; and
FIG. 9 is a block diagram illustrating an electronic device in a network environment according to various embodiments of the disclosure.

### [Mode for Carrying out the Invention]

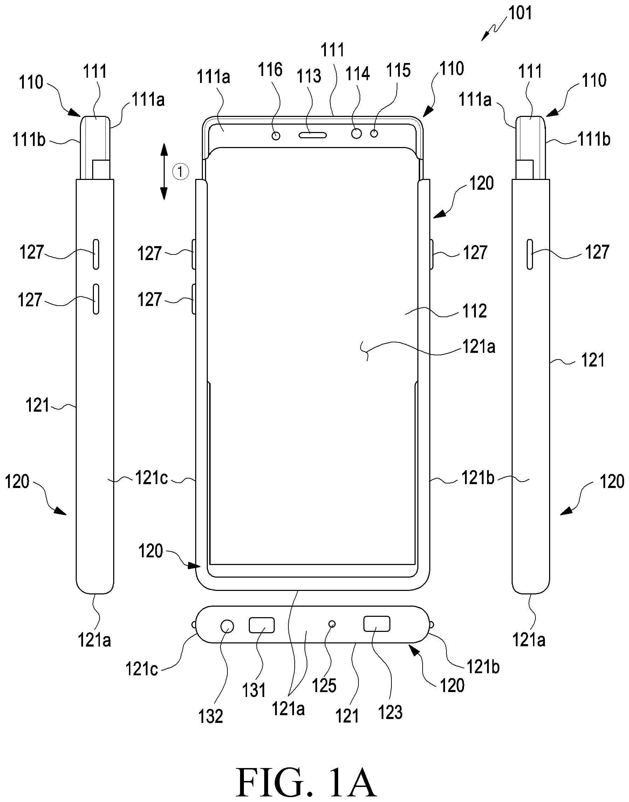

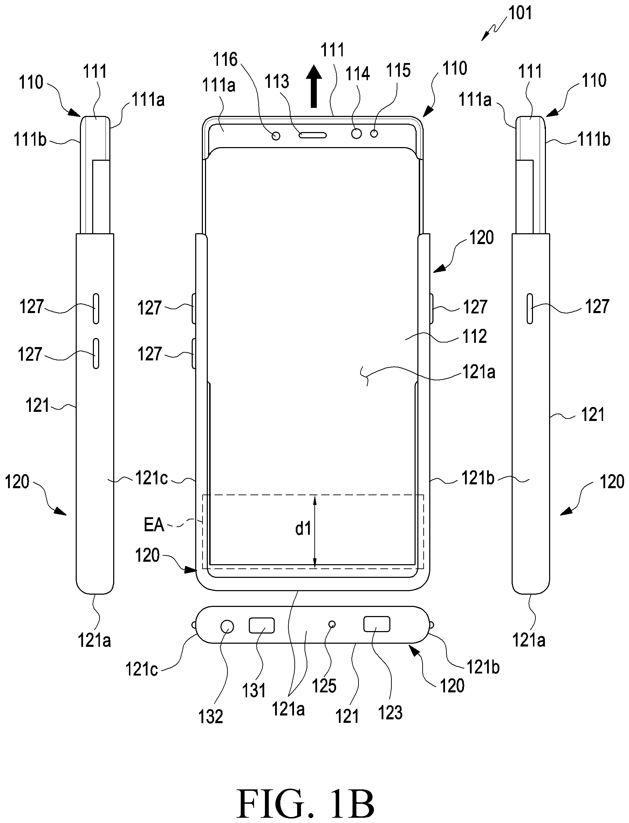

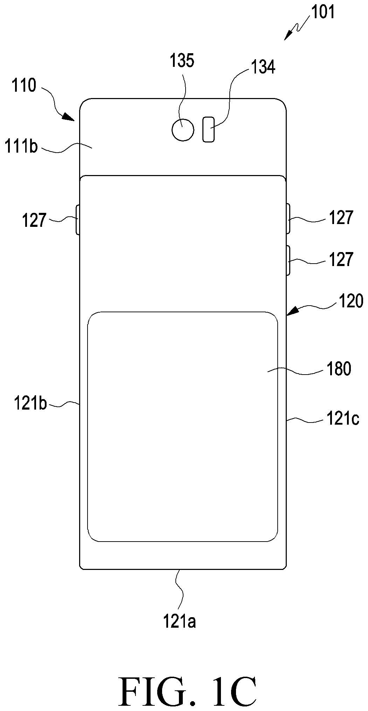

FIG. 1A is a view illustrating a closed state of an electronic device 101 according to various embodiments of the disclosure. FIG. 1B is a view illustrating an opened state of the electronic device 101 of FIG. 1A. FIG. 1C is a view illustrating a rear surface of the electronic device 101 of FIG. 1A.

FIG. 1A illustrates a closed state of a first structure 110 with respect to a second structure 120, and FIG. 1B illustrates an opened state of the first structure 110 with respect to the second structure 120.

Referring to FIGS. 1A, 1B, and 1C, an electronic device 101 may include a first structure 110 (e.g., first housing) and a second structure 120 (e.g., second housing) disposed to be movable from the first structure 110. According to an embodiment of the disclosure, the first structure 110 may move back and forth by a predetermined distance d1 along directions shown on the second structure 120. According to an embodiment of the disclosure, a main circuit board on which electrical components, such as an application processor (AP) and a communication processor (CP) are mounted may be disposed in the second housing 110. According to an embodiment of the disclosure, a driving module (e.g., motor), a speaker, a sim socket, and/or a sub circuit board electrically connected with a main circuit board may be disposed in the second structure 120. According to an embodiment of the disclosure, the rack may be disposed in the second structure 120 and guide the slide of the first structure 110 and the display 112. According to an embodiment of the disclosure, the rack may be fixedly disposed on one surface of the second structure 120 and guide a gear connected to the driving module to move in the sliding direction while rotating. According to another embodiment of the disclosure, the rack may be disposed in the first structure 110, and the driving module may be disposed in the second structure 120 According to an embodiment of the disclosure, a first plate 111 of the first structure 110 may include a first surface 111a and a second surface 111b facing in the direction opposite to the first surface 111a. According to an embodiment of the disclosure, the second structure 120 may include a second plate 121, a first sidewall 121a extending from the second plate 121, a second sidewall 121b extending from the first sidewall 121a and the second plate 121, a third sidewall 121c extending from the first sidewall 121a and the second plate 121 and in parallel to the second sidewall 121b, or a second rear plate 180 (e.g., rear window). According to an embodiment, the second plate 121, the first sidewall 121a, the second sidewall 121b, and the third sidewall 121c may form a trough 220a to have an open side to receive at least a portion of the first structure 110. For example, the second structure 120 may be coupled to surround a portion of the first structure 110. The first structure 110 may reciprocate linearly along the direction of the arrow ① with respect to the second structure 120. According to an embodiment of the disclosure, the second sidewall 121b or the third sidewall 121c may be omitted. According to an embodiment of the disclosure, the second plate 121, the first sidewall 121a, the second sidewall 121b, or the third sidewall 121c may be integrally formed with each other. According to an embodiment of the disclosure, the second plate 121, the first sidewall 121a, the second sidewall 121b, or the third sidewall 121c may be formed individually and be jointed together. According to an embodiment, the second rear plate 180 may cover at least part of the display 112. According to an embodiment of the disclosure, the size of the display screen displayed on the front surface may be changed by raising and lowering the second rear plate 180 in the vertical direction. According to an embodiment of the disclosure, the first structure 110 is movable into the opened state and closed state with respect to the second structure 120, in the first direction (e.g., the direction of arrow ① parallel to the second plate 121 and the second sidewall 121b so that the first structure 110 is placed in a first distance from the first sidewall 121a in the closed state and is placed in a second distance larger than the first distance, from the first sidewall 121a in the opened state. According to an embodiment of the disclosure, the electronic device 101 may include at least one or more a display 112, audio modules 113 and 123, camera modules 115 and 135, an indicator 116 (e.g., a light emitting diode (LED) device), sensor modules 114 and 134, a key input device 127, or connector holes 131 and 132. According to an embodiment of the disclosure, the display 112 may include a flat portion 112a crossing and extending at least a portion of the first surface 111a and disposed on the first surface 111a and a bendable portion extending from the flat portion 112a to a space between the first sidewall 121a and the first structure 110 in the closed state. According to an embodiment of the disclosure, as viewed from above the first plate 111, the bendable portion may be configured to at least partially be moved by a predetermined marked area EA to the flat portion 112a to form substantially a flat surface between the flat portion 112a and the first side wall 121a when the first structure 110 is moved from the closed state to the open state. The display 112 may be disposed to be coupled with, or adjacent, a touch detecting circuit, a pressure sensor capable of measuring the strength (pressure) of touches, and/or a digitizer for detecting a magnetic field-type stylus pen. For example, the display 112 may include a flexible touchscreen display layer.

According to an embodiment of the disclosure, the audio modules 113, 123, and 125 may include speaker holes 113 and 123 and a microphone hole 125. The speaker holes 113 and 123 may include a receiver hole 113 or an external speaker hole 123. The microphone hole 125 may have a microphone inside to obtain external sounds. According to an embodiment, there may be a plurality of microphones to be able to detect the direction of a sound. According to an embodiment, the speaker holes 113 and 123 and the microphone hole 125 may be implemented as a single hole, or speakers (e.g., piezo electric speakers) may be included without the speaker holes 113 and 123. According to an embodiment, the receiver hole 113 may be disposed in the first structure 110, and the external speaker hole 123 or the microphone hole 125 may be disposed in the second structure 120. According to an embodiment, the external speaker hole 123 may be disposed on the second surface 111b of the first plate 111 or on a side surface of the first structure 110. According to an embodiment, the microphone hole 125 may be disposed on a side surface of the first structure 110.

According to an embodiment of the disclosure, the sensor modules 114 and 134 may generate an electrical signal or data value corresponding to an internal operating state or external environmental state of the electronic device 101. The sensor modules 114 and 134 may include a first sensor module 114 (e.g., a proximity sensor) disposed on, e.g., the first surface 111a of the first plate 111 and/or a second sensor module (e.g., a fingerprint sensor) (not shown) disposed on the second surface 111b of the first plate 111 and/or a third sensor module 134 (e.g., a hear rate monitor (HRM) sensor). The electronic device 101 may include a sensor module not shown, e.g., at least one of a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

According to an embodiment of the disclosure, the camera modules 115 and 135 include a first camera device 115 disposed on the first surface 111a of the first plate 111 and a second camera device 135 disposed on the second surface 111b. The first camera device 115 or the second camera device 135 may include one or more lenses, an image sensor, and/or an image signal processor. According to an embodiment, the second camera device 135 may be disposed on one surface of the second structure 120.

According to an embodiment of the disclosure, the key input device 127 may be disposed on the second sidewall 121b or the third sidewall 121c of the second structure 120. The electronic device 101 may include a key input device (not shown), e.g., a home key button or a touchpad disposed around the home key button. According to another embodiment, at least a portion of the key input device 127 may be positioned on an area of the first structure 110.

According to an embodiment of the disclosure, the indicator 116 may be disposed on the first surface 111a of the first plate 111. The indicator 116 may provide, e.g., state information about the electronic device 101 in the form of light and may include an LED.

According to an embodiment of the disclosure, the connector holes 131 and 132 may include, e.g., a first connector hole 131 for receiving a connector (e.g., a universal serial bus (USB) connector) for transmitting or receiving power and/or data to/from an external electronic device and/or a second connector hole (e.g., an earphone jack) 132 for receiving a connector for transmitting or receiving audio signals to/from the external electronic device. According to an embodiment, the first connector hole 131 or the second connector hole 132 may be disposed on the first side wall 121a of the second structure 120. According to an embodiment, the first connector hole 131 or the second connector hole 132 may be formed on a side wall of the first structure 110.

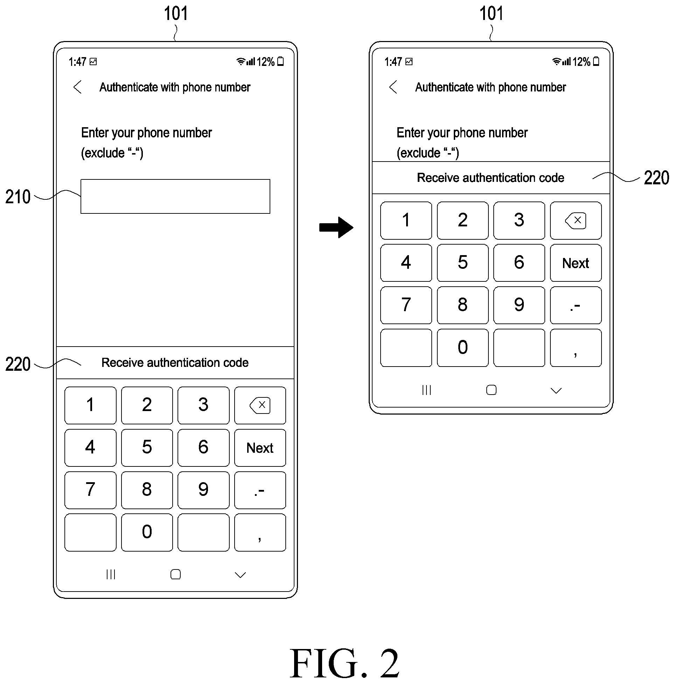

FIG. 2 is a view illustrating an example in which a text input field 210 is overlapped (e.g., hidden) by a virtual keypad 220 as a portable device 201 according to the prior art switches from an open state to a closed state.

Referring to FIG. 2, the portable device 201 according to the prior art may switch from the open state to the closed state according to a display shrink event to reduce the area of the exposed flexible display. In this case, as shown in FIG. 2, the text input field 210 which used to be shown in the open state, as the portable device 201 according to the prior art switches to the closed state, may be overlapped not to be shown by the virtual keypad 220. In this case, the user may have difficulty in identifying the characters being entered to the text input field 210.

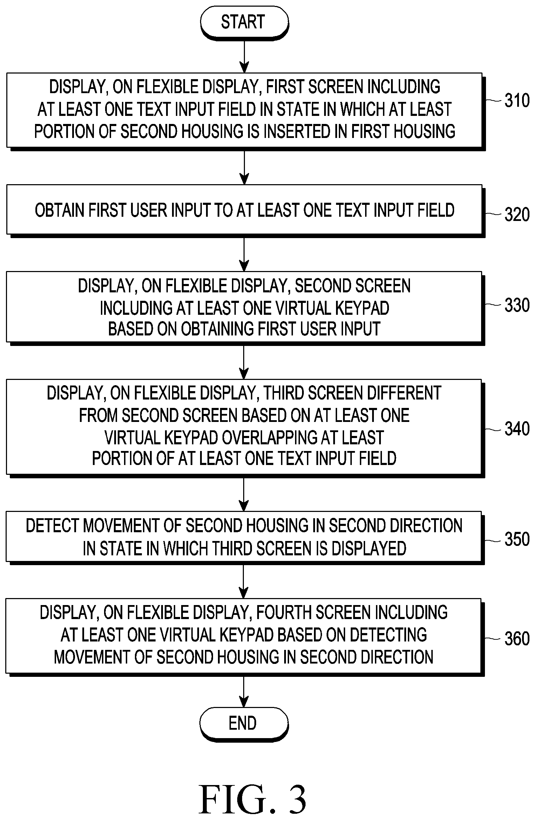

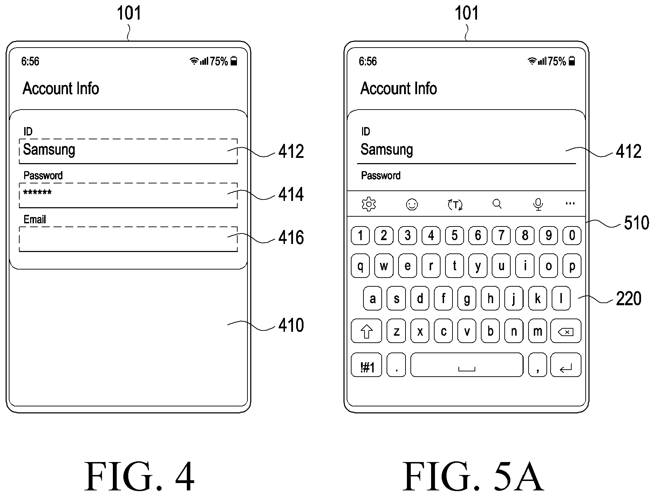

FIG. 3 is a view illustrating an example function or operation of controlling a screen including a virtual keypad 220 by an electronic device 101 to allow a user to identify at least one character entered to a text input field 210 overlapped by the virtual keypad 220 according to an embodiment of the disclosure. FIG. 4 is a view illustrating an example function or operation of receiving a user input through a text input field according to an embodiment of the disclosure.

Referring to FIG. 3, in operation 310, an electronic device 101 (e.g., the processor 920) according to an embodiment of the disclosure may display a first screen 410 including at least one text input field 210 on a flexible display (e.g., the display 112) in a state where at least a portion of the second housing (e.g., the first structure 110) is inserted in the first housing (e.g., the second structure 120). As illustrated in FIG. 4, the electronic device 101 according to an embodiment of the disclosure may display a first screen 410 including at least one text input field (e.g., the first text input field 412, the second text input field 414, and the third text input field 416) on the flexible display (e.g., the display 112) in a closed state (e.g., a fully closed state) of the electronic device 101. The first screen 410 according to an embodiment of the disclosure may include, e.g., an execution screen of a specific application (e.g., Samsung^{®} Account^{™} application). At least one character may be entered to at least one text input field (e.g., the first text input field 412, the second text input field 414, and the third text input field 416) according to an embodiment of the disclosure. For example, as illustrated in FIG. 4, user identification information may be entered to the first text input field 412, password information may be entered to the second text input field 414, and an email address may be entered to the third text input field 416.

In operation 320, the electronic device 101 (e.g., the processor 920) according to an embodiment of the disclosure may obtain a first user input to at least one text input field (e.g., the first text input field 412, the second text input field 414, and the third text input field 416). The electronic device 101 according to an embodiment of the disclosure may obtain the user's touch input to a specific text input field (e.g., the third text input field 416) as illustrated in FIG. 4.

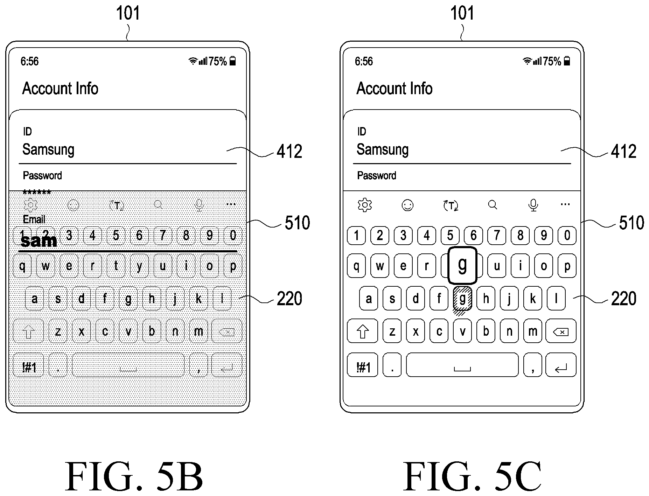

In operation 330, the electronic device 101 (e.g., the processor 920) according to an embodiment of the disclosure may display a second screen 510 including at least one virtual keypad 220 on the flexible display (e.g., the display 112), based on obtaining the first user input. As illustrated in FIG. 5A, the electronic device 101 according to an embodiment of the disclosure may display a second screen 510 including at least one virtual keypad 220 overlapping at least a portion of the first screen 410 on the flexible display (e.g., the display 112). In the second screen 510 according to an embodiment of the disclosure, at least one text input field (e.g., the third text input field) may not be shown depending on the display of the at least one virtual keypad 220.

In operation 340, the electronic device 101 (e.g., the processor 920) according to an embodiment of the disclosure may display a third screen 520 different from the second screen 510 on the flexible display (e.g., the display 112), based on the at least one virtual keypad 220 overlapping at least a portion of at least one text input field (e.g., the third text input field 416). In order to perform operation 340, the electronic device 101 according to an embodiment of the disclosure may determine whether the at least one virtual keypad 220 overlaps at least a portion of the at least one text input field (e.g., the third text input field 416). The electronic device 101 according to an embodiment of the disclosure may identify the position where the text input field is displayed in the currently displayed image, and may determine whether the at least one virtual keypad 220 overlaps at least a portion of the at least one text input field (e.g., the third text input field 416) by comparing the size (e.g., height) of the virtual keypad 220 with the identified position. The electronic device 101 according to an embodiment of the disclosure may determine that when the at least one virtual keypad 220 overlaps more than a predesignated proportion (e.g., 80%) of the size (e.g., height0 of the at least one text input field (e.g., the first text input field 412, the second text input field 414, or the third text input field 416) is when the at least one virtual keypad 220 overlaps the at least one text input field (e.g., the third text input field 416). The electronic device 101 according to an embodiment of the disclosure may determine whether the at least one virtual keypad 220 overlaps at least a portion of the at least one text input field (e.g., the third text input field 416) by analyzing the image on which the at least one virtual keypad 220 is displayed (e.g., identifying whether pixels overlap each other) after the at least one virtual keypad 220 is displayed. The electronic device 101 according to an embodiment of the disclosure may determine whether the at least one virtual keypad 220 overlaps at least a portion of the at least one text input field (e.g., the third text input field 416) before the at least one virtual keypad 220 is displayed. In this case, when it is expected that the at least one virtual keypad 220 does not overlap the at least one text input field (e.g., the first text input field 412), the third screen according to an embodiment of the disclosure may not be displayed. Hereinafter, various embodiments of the third screen displayed when the at least one virtual keypad 220 overlaps at least a portion of at least one text input field (e.g., the third text input field 416) are described.

FIGS. 5A to 5C are views illustrating an example third screen 520 including a virtual keypad 220 whose transparency is changed by a user's input according to an embodiment of the disclosure. Referring to FIG. 5A, the electronic device 101 according to an embodiment of the disclosure may obtain a text input request through the virtual keypad 220 from the user in a state in which the at least one virtual keypad 220 overlaps at least a portion of the at least one text input field (e.g., the third text input field 416). When a text input request (e.g., a touch input) is being received from the user through the virtual keypad 220, the electronic device 101 according to an embodiment of the disclosure may set the transparency of the virtual keypad 220 to 100% (e.g., opaque) and display the virtual keypad 220. As shown in FIG. 5B, the electronic device 101 according to an embodiment of the disclosure may change the transparency of the at least one virtual keypad 220 to 40% (e.g., translucent) after a predesignated time (e.g., 3 seconds) elapses after the text input request is received from the user and may display the virtual keypad 220. In this case, the user may identify at least one character that the user himself enters to the text input field (e.g., the third text input field 416) through the at least one translucently displayed virtual keypad 220. The electronic device 101 according to an embodiment of the disclosure may change the transparency of the at least one virtual keypad 220 to 40% (e.g., translucent) and display the virtual keypad 220 and then, if a user input to the at least one virtual keypad 220 is detected again, change the transparency of the at least one virtual keypad 220 to 100% and display the virtual keypad 220. The third screen 520 according to an embodiment of the disclosure may include at least one virtual keypad 220 whose transparency has been changed, allowing the user to identify at least one character hidden by the at least one virtual keypad 220. Thus, there may be provided an electronic device 101 that controls a screen to allow the user to easily identify the characters not shown to the user by being overlapped by at least one virtual keypad 220.

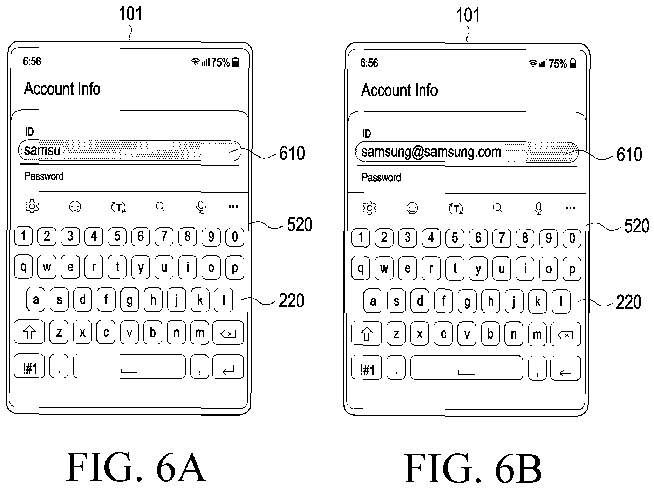

FIGS. 6A and 6B are views illustrating an example third screen 520 including a preview pop-up window 610 according to an embodiment of the disclosure. Referring to FIGS. 6A and 6B, the electronic device 101 according to an embodiment of the disclosure may receive a text input request through the at least one virtual keypad 220 from the user in a state in which the at least one text input field (e.g., the third text input field 416) is overlapped by the at least one virtual keypad 220. As illustrated in FIG. 6A, the electronic device 101 according to an embodiment of the disclosure may display a preview pop-up window 610 including the characters entered by the user at an upper end of at least one virtual keypad 220. The preview pop-up window 610 according to an embodiment of the disclosure may no longer be displayed when the electronic device 101 is switched to the open state so that at least one text input field (e.g., the third text input field 416) hidden by the at least one virtual keypad 220 is fully or partially (e.g., 80% or more of the height of the at least one text input field (e.g., the third text input field 416)) is shown. The preview pop-up window 610 according to an embodiment of the disclosure may be displayed according to a predetermined transparency (e.g., translucent). The preview pop-up window 610 according to an embodiment of the disclosure may be displayed to be visually distinguished by a color different from the color of the at least one virtual keypad 220. FIG. 6A illustrates a state in which the electronic device 101 according to an embodiment of the disclosure receives the character string "samsu" from the user, and FIG. 6B illustrates an example in which the electronic device 101 according to an embodiment of the disclosure receives the character string "samsung@samsung.com" from the user. The third screen 520 according to an embodiment of the disclosure may include the preview pop-up window 610 including at least one character entered by the user, allowing the user to identify at least one character hidden by the at least one virtual keypad 220. Thus, there may be provided an electronic device 101 that controls a screen to allow the user to easily identify the characters not shown to the user by being overlapped by at least one virtual keypad 220.

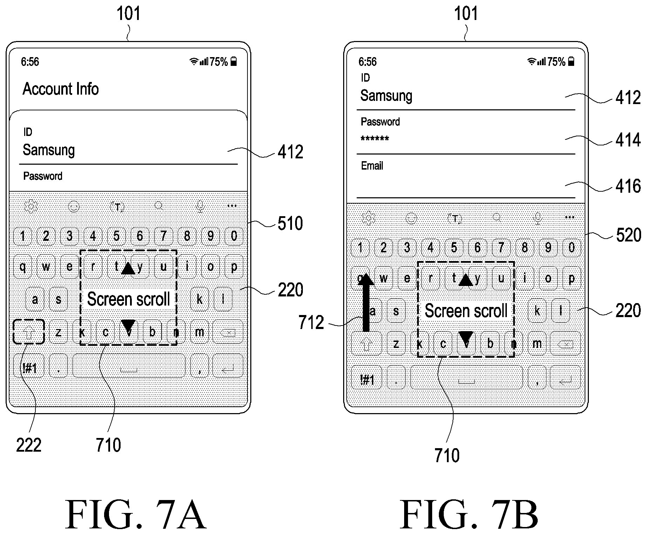

FIGS. 7A and 7B are views illustrating a third screen 520 including a guide message 710 to guide to scroll a screen (e.g., the first screen 410) overlapped by a virtual keypad 220 according to a user input according to an embodiment of the disclosure. As illustrated in FIG. 7A, the guide message 710 according to an embodiment of the disclosure may include a message for indicating that it is possible to scroll up/down on a screen (e.g., the first screen 410) overlapped by the at least one virtual keypad 220. The guide message 710 according to an embodiment of the disclosure may be displayed overlappingly on at least one virtual keypad 220. In this case, the at least one virtual keypad 220 according to an embodiment of the disclosure may be displayed to be darker than the brightness set in advance or by the user or to be translucent. However, the at least one virtual keypad 220 according to an embodiment of the disclosure may be displayed according to the brightness set by the user or in advance, or to be opaque. As illustrated in FIG. 7A, the guide message 710 according to an embodiment of the disclosure may include a message for indicating that it is possible to scroll up/down on a screen (e.g., the first screen 410) overlapped by the at least one virtual keypad 220. Upon receiving a drag input 712 in an upper or lower direction after a long touch to at least one key (e.g., the shift key 222) of the at least one virtual keypad 220, the electronic device 101 according to an embodiment of the disclosure may scroll the screen (e.g., the first screen 410) overlapped by the at least one virtual keypad 220 according to the user's drag input. FIG. 7B illustrates a screen in which a screen (e.g., the first screen 410) overlapped by at least one virtual keypad 220 is scrolled according to the user's drag input. When the user's character entry is terminated in a state in which the screen is scrolled (e.g., when the at least one virtual keypad 220 is no longer displayed), the electronic device 101 according to an embodiment of the disclosure may display the pre-scroll screen back. The guide message 710 according to an embodiment of the disclosure may not be displayed any longer when the screen is scrolled according to the drag input 712 so that the at least one text input field (e.g., the third text input field 416) overlapped by the at least one virtual keypad 220 is rendered to be shown. However, according to another embodiment of the disclosure, the guide message 710 may remain displayed even when the at least one text input field (e.g., the third text input field 416) overlapped by the at least one virtual keypad 220 is rendered to be shown as the screen is scrolled according to the drag input 712. The third screen 520 according to an embodiment of the disclosure may include the guide message 710 indicating that screen scrolling is possible, and the electronic device 101 may scroll the screen (e.g., the first screen 410) overlapped by the at least one virtual keypad 220 according to a drag input entered by the user. Thus, there may be provided an electronic device 101 that controls a screen to allow the user to easily identify the characters not shown to the user by being overlapped by at least one virtual keypad 220. Although FIGS. 7A and 7B illustrate that a portion of the virtual keypad 220 is hidden by the guide message 710, a portion of the virtual keypad 220 according to an embodiment of the disclosure may be displayed to overlap the guide message 710 without being hidden by the guide message 710.

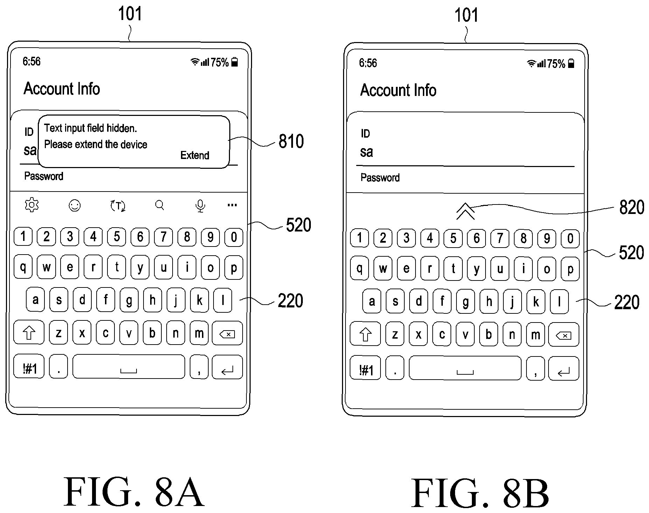

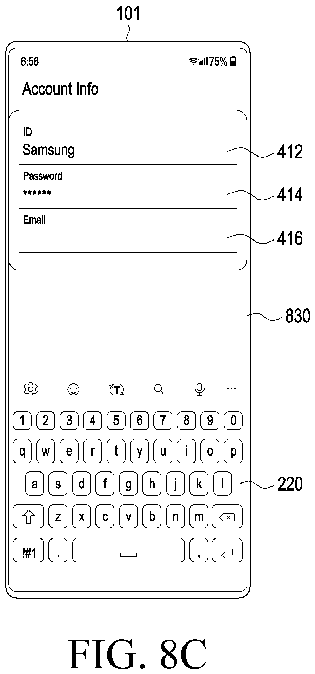

FIGS. 8A and 8B are views illustrating an example third screen 820 including an indicator 820 and an extend guide message 810 to indicate that a second housing (e.g., the first structure 110) should be moved to show at least one text input field (e.g., the third text input field 416) overlapped by at least one virtual keypad 220. FIG. 8C is a view illustrating an example function or operation in which a text input field overlapped by a virtual keypad is shown as an electronic device turns into an open state as a second housing moves according to an embodiment of the disclosure. Referring to FIG. 8A, when the at least one text input field (e.g., the third text input field 416) is overlapped by the at least one virtual keypad 220, the electronic device 101 according to an embodiment of the disclosure may display an extend guide message 810 indicating that the second housing (e.g., the first structure 110) should be moved so that the at least one text input field (e.g., the third text input field 416) overlapped by the at least one virtual keypad 220 is shown, as illustrated in FIG. 8A. When the user detects a selection input (e.g., a selection input to "extend") to the extend guide message 810, the electronic device 101 according to an embodiment of the disclosure may extend the electronic device 101 fully or partially (e.g., so that the text input field hidden by at least one virtual keypad 220 is at least shown) as illustrated in FIG. 8C. When the electronic device 101 is partially extended, the electronic device 101 according to an embodiment of the disclosure may compute the extended length to show the text input field hidden by the at least one virtual keypad 220 and control the driving module to extend the electronic device 101 as much as the computed length. The electronic device 101 according to an embodiment of the disclosure may compute the length to be extended by analyzing the currently displayed image (e.g., computes the distance at which the virtual keypad does not overlap the text input field hidden by the virtual keypad 220, based on the pixel size). The electronic device 101 according to an embodiment of the disclosure may identify the extended length based on the number of rotations of the driving module or identify the extended length of the flexible display using sensing data based on various elements (e.g., conductive elements) capable of sensing the extended length. When the at least one text input field (e.g., the third text input field 416) is overlapped by the at least one virtual keypad 220, the electronic device 101 according to an embodiment of the disclosure may display an indicator 820 indicating that the second housing (e.g., the first structure 110) should be moved so that the at least one text input field (e.g., the third text input field 416) overlapped by the at least one virtual keypad 220 is shown, as illustrated in FIG. 8A. When the user detects a selection input to the indicator 820, the electronic device 101 according to an embodiment of the disclosure may extend the electronic device 101 fully or partially (e.g., to show at least a portion (e.g., 80% of the text input field) of the text input field hidden by the at least one virtual keypad 220) as illustrated in FIG. 8C. The indicator 820 according to an embodiment of the disclosure may be displayed for a predetermined time (e.g., 5 seconds). The third screen 520 according to an embodiment of the disclosure may include the extend guide message 810 and/or the indicator 820, and the state of the electronic device 101 may be changed according to the extend guide message 810 and/or the indicator 820, allowing the user to identify the at least one character hidden by the at least one virtual keypad 220. Thus, there may be provided an electronic device 101 that controls a screen to allow the user to easily identify the characters not shown to the user by being overlapped by at least one virtual keypad 220.

In operation 350, the electronic device 101 according to an embodiment of the disclosure may detect a movement of the second housing in a second direction in a state in which the third screen 520 is displayed. According to an embodiment of the disclosure, the second housing may be moved in the second direction through an automatic method (e.g., in a manner that the driving module is controlled by the processor 920) or a manual method (e.g., in a manner that it is moved by an external force from the user).

In operation 360, the electronic device 101 according to an embodiment of the disclosure may display a fourth screen 830 including at least one virtual keypad on the flexible display (e.g., the display 112) based on detecting the movement of the second housing in the second direction. The fourth screen 820 according to an embodiment of the disclosure may include a screen in which at least one text input field (e.g., the third text input field 416) is not hidden by the virtual keypad 220.

Upon identifying that at least one text input field (e.g., the third text input field 416) is hidden due to the display of the virtual keypad 220, the electronic device 101 according to an embodiment of the disclosure may be extended fully or partially (e.g., so that at least a portion of the text input field (e.g., 80% of the text input field) hidden by the at least one virtual keypad 220 is shown).

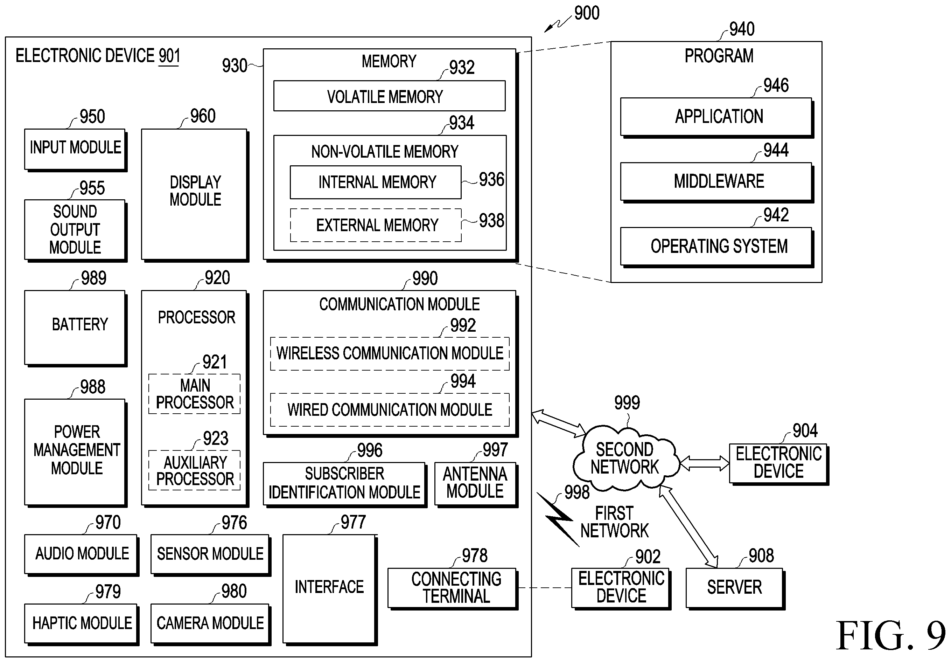

FIG. 9 is a block diagram illustrating an electronic device 901 in a network environment 900 according to various embodiments. Referring to FIG. 9, the electronic device 901 in the network environment 900 may communicate with at least one of an electronic device 902 via a first network 998 (e.g., a short-range wireless communication network), or an electronic device 904 or a server 908 via a second network 999 (e.g., a long-range wireless communication network). According to an embodiment, the electronic device 901 may communicate with the electronic device 904 via the server 908. According to an embodiment, the electronic device 901 may include a processor 920, memory 930, an input module 950, a sound output module 955, a display module 960, an audio module 970, a sensor module 976, an interface 977, a connecting terminal 978, a haptic module 979, a camera module 980, a power management module 988, a battery 989, a communication module 990, a subscriber identification module (SIM) 996, or an antenna module 997. In an embodiment, at least one (e.g., the connecting terminal 978) of the components may be omitted from the electronic device 901, or one or more other components may be added in the electronic device 101. According to an embodiment, some (e.g., the sensor module 976, the camera module 980, or the antenna module 997) of the components may be integrated into a single component (e.g., the display module 960).

The processor 920 may execute, for example, software (e.g., a program 940) to control at least one other component (e.g., a hardware or software component) of the electronic device 901 coupled with the processor 920, and may perform various data processing or computation. According to an embodiment, as at least part of the data processing or computation, the processor 920 may store a command or data received from another component (e.g., the sensor module 976 or the communication module 990) in volatile memory 932, process the command or the data stored in the volatile memory 932, and store resulting data in non-volatile memory 934. According to an embodiment, the processor 920 may include a main processor 921 (e.g., a central processing unit (CPU) or an application processor (AP)), or an auxiliary processor 923 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 901 includes the main processor 921 and the auxiliary processor 923, the auxiliary processor 923 may be configured to use lower power than the main processor 921 or to be specified for a designated function. The auxiliary processor 923 may be implemented as separate from, or as part of the main processor 921.

The auxiliary processor 923 may control at least some of functions or states related to at least one component (e.g., the display module 960, the sensor module 976, or the communication module 990) among the components of the electronic device 901, instead of the main processor 921 while the main processor 921 is in an inactive (e.g., sleep) state, or together with the main processor 921 while the main processor 921 is in an active state (e.g., executing an application). According to an embodiment, the auxiliary processor 923 (e.g., an image signal processor or a communication processor) may be implemented as part of another component (e.g., the camera module 980 or the communication module 990) functionally related to the auxiliary processor 123. According to an embodiment, the auxiliary processor 923 (e.g., the neural processing unit) may include a hardware structure specified for artificial intelligence model processing. The artificial intelligence model may be generated via machine learning. Such learning may be performed, e.g., by the electronic device 901 where the artificial intelligence is performed or via a separate server (e.g., the server 908). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 930 may store various data used by at least one component (e.g., the processor 920 or the sensor module 976) of the electronic device 901. The various data may include, for example, software (e.g., the program 940) and input data or output data for a command related thereto. The memory 930 may include the volatile memory 932 or the non-volatile memory 934.

The program 940 may be stored in the memory 930 as software, and may include, for example, an operating system (OS) 942, middleware 944, or an application 946.

The input module 950 may receive a command or data to be used by other component (e.g., the processor 920) of the electronic device 901, from the outside (e.g., a user) of the electronic device 901. The input module 950 may include, for example, a microphone, a mouse, a keyboard, keys (e.g., buttons), or a digital pen (e.g., a stylus pen).

The sound output module 955 may output sound signals to the outside of the electronic device 901. The sound output module 955 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 960 may visually provide information to the outside (e.g., a user) of the electronic device 901. The display 960 may include, for example, a display, a hologram device, or a projector and control circuitry to control a corresponding one of the display, hologram device, and projector. According to an embodiment, the display 960 may include a touch sensor configured to detect a touch, or a pressure sensor configured to measure the intensity of a force generated by the touch.

The audio module 970 may convert a sound into an electrical signal and vice versa. According to an embodiment, the audio module 970 may obtain the sound via the input module 950, or output the sound via the sound output module 955 or a headphone of an external electronic device (e.g., an electronic device 902) directly (e.g., wiredly) or wirelessly coupled with the electronic device 901.

The sensor module 976 may detect an operational state (e.g., power or temperature) of the electronic device 901 or an environmental state (e.g., a state of a user) external to the electronic device 101, and then generate an electrical signal or data value corresponding to the detected state. According to an embodiment, the sensor module 976 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 977 may support one or more specified protocols to be used for the electronic device 901 to be coupled with the external electronic device (e.g., the electronic device 902) directly (e.g., wiredly) or wirelessly. According to an embodiment, the interface 977 may include, for example, a high definition multimedia interface (HDMI), a universal serial bus (USB) interface, a secure digital (SD) card interface, or an audio interface.

A connecting terminal 978 may include a connector via which the electronic device 901 may be physically connected with the external electronic device (e.g., the electronic device 902). According to an embodiment, the connecting terminal 978 may include, for example, a HDMI connector, a USB connector, a SD card connector, or an audio connector (e.g., a headphone connector).

The haptic module 979 may convert an electrical signal into a mechanical stimulus (e.g., a vibration or motion) or electrical stimulus which may be recognized by a user via his tactile sensation or kinesthetic sensation. According to an embodiment, the haptic module 979 may include, for example, a motor, a piezoelectric element, or an electric stimulator.

The camera module 980 may capture a still image or moving images. According to an embodiment, the camera module 980 may include one or more lenses, image sensors, image signal processors, or flashes.

The power management module 988 may manage power supplied to the electronic device 901. According to an embodiment, the power management module 988 may be implemented as at least part of, for example, a power management integrated circuit (PMIC).

The battery 989 may supply power to at least one component of the electronic device 901. According to an embodiment, the battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more communication processors that are operable independently from the processor 920 (e.g., the application processor (AP)) and supports a direct (e.g., wired) communication or a wireless communication. According to an embodiment, the communication module 990 may include a wireless communication module 992 (e.g., a cellular communication module, a short-range wireless communication module, or a global navigation satellite system (GNSS) communication module) or a wired communication module 994 (e.g., a local area network (LAN) communication module or a power line communication (PLC) module). A corresponding one of these communication modules may communicate with the external electronic device 904 via a first network 998 (e.g., a short-range communication network, such as Bluetooth^{™}, wireless-fidelity (Wi-Fi) direct, or infrared data association (IrDA)) or a second network 999 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 992 may identify or authenticate the electronic device 901 in a communication network, such as the first network 998 or the second network 999, using subscriber information (e.g., international mobile subscriber identity (IMSI)) stored in the subscriber identification module 996.

The wireless communication module 992 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 992 may support a high-frequency band (e.g., the mmWave band) to achieve, e.g., a high data transmission rate. The wireless communication module 992 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 992 may support various requirements specified in the electronic device 901, an external electronic device (e.g., the electronic device 904), or a network system (e.g., the second network 999). According to an embodiment, the wireless communication module 992 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 997 may transmit or receive a signal or power to or from the outside (e.g., the external electronic device). According to an embodiment, the antenna module 997 may include one antenna including a radiator formed of a conductor or conductive pattern formed on a substrate (e.g., a printed circuit board (PCB)). According to an embodiment, the antenna module 997 may include a plurality of antennas (e.g., an antenna array). In this case, at least one antenna appropriate for a communication scheme used in a communication network, such as the first network 998 or the second network 999, may be selected from the plurality of antennas by, e.g., the communication module 990. The signal or the power may then be transmitted or received between the communication module 990 and the external electronic device via the selected at least one antenna. According to an embodiment, other parts (e.g., radio frequency integrated circuit (RFIC)) than the radiator may be further formed as part of the antenna module 997.

According to various embodiments, the antenna module 997 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 901 and the external electronic device 904 via the server 908 coupled with the second network 999. The external electronic devices 902 or 904 each may be a device of the same or a different type from the electronic device 901. According to an embodiment, all or some of operations to be executed at the electronic device 901 may be executed at one or more of the external electronic devices 902, 904, or 908. For example, if the electronic device 901 should perform a function or a service automatically, or in response to a request from a user or another device, the electronic device 901, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 901. The electronic device 901 may provide the outcome, with or without further processing of the outcome, as at least part of a reply to the request. To that end, a cloud computing, distributed computing, mobile edge computing (MEC), or client-server computing technology may be used, for example. The electronic device 901 may provide ultra low-latency services using, e.g., distributed computing or mobile edge computing. In another embodiment, the external electronic device 904 may include an Internet-of-things (IoT) device. The server 908 may be an intelligent server using machine learning and/or a neural network. According to an embodiment, the external electronic device 904 or the server 908 may be included in the second network 999. The electronic device 901 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 936 or external memory 938) that is readable by a machine (e.g., the electronic device 101). For example, a processor (e.g., the processor 920) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment of the disclosure, each component (e.g., a module or a program) of the above-described components may include a single entity or multiple entities. Some of the plurality of entities may be separately disposed in different components. According to an embodiment of the disclosure, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment of the disclosure, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a first housing;
a second housing disposed to be movable with respect to the first housing and overlapping at least a portion of the first housing;
at least one motor driver configured to move the first housing or the second housing;
at least one processor disposed inside the first housing or the second housing; and
a flexible display at least partially mounted on a surface of the second housing and at least partially exposed to an outside of the electronic device, wherein a portion of the flexible display is inserted into or drawn out of the first housing according to driving of the motor driver, and wherein the at least one processor is configured to:
display, on the flexible display, a first screen including at least one text input field in a state in which at least a portion of the second housing is inserted in the first housing;
obtain a first user input to the at least one text input field;
display, on the flexible display, a second screen including at least one virtual keypad based on obtaining the first user input, the at least one virtual keypad overlapping at least a portion of the at least one text input field; and
display, on the flexible display, a third screen different from the second screen, based on the at least one virtual keypad overlapping the at least the portion of the at least one text input field.

2. The electronic device of claim 1, wherein the third screen includes a screen in which a transparency of the at least one virtual keypad is changed according to a second user input to the at least one virtual keypad.

3. The electronic device of claim 2, wherein the at least one processor is further configured to change the transparency back to a pre-change transparency if the second user input is released.

4. The electronic device of claim 1, wherein the third screen includes a preview window including at least one character to be entered to the at least one text input field according to a third user input to the at least one virtual keypad.

5. The electronic device of claim 1, wherein the third screen includes a guide message indicating that a screen including the at least one text input field overlapped by the at least one virtual keypad is scrollable according to a user input to at least one object included in the at least one keypad.

6. The electronic device of claim 5, wherein the at least one processor is further configured to scroll the screen including the at least one text input field overlapped by the at least one virtual keypad based on the user input to the at least one object.

7. The electronic device of claim 1, wherein the third screen includes an extend guide message indicating that the second housing should be moved in the second direction so that the at least one text input field overlapped by the at least one keypad is shown.

8. The electronic device of claim 7, wherein the at least one processor is further configured to control the motor driver to move the second housing in the second direction according to a third user input to the extend guide message.

9. The electronic device of claim 1, wherein the third screen includes an indicator indicating that the second housing should be moved in the second direction so that the at least one text input field overlapped by the at least one keypad is shown.

10. The electronic device of claim 9, wherein the at least one processor is further configured to control the **driving module** to move the second housing in the second direction according to a predesignated distance or a maximum distance to which the second housing is movable upon receiving a fourth user input to the indicator.

11. A method for controlling an electronic device, the electronic device including a first housing, a second housing disposed to be movable with respect to the first housing and overlapping at least a portion of the first housing, at least one motor driver configured to move the first housing or the second housing, at least one processor disposed inside the second housing, and a flexible display at least partially mounted on a surface of the second housing and at least partially exposed to an outside of the electronic device, the flexible display being at least partially inserted into the first housing based on the second housing being moved in a first direction with respect to the first housing, and being drawn out of the first housing based on the second housing being moved in a direction with respect to the first housing, the method comprising:
displaying, on the flexible display, a first screen including at least one text input field in a state in which at least a portion of the second housing is inserted in the first housing;
obtaining a first user input to the at least one text input field;
displaying, on the flexible display, a second screen including at least one virtual keypad based on obtaining the first user input, the at least one virtual keypad overlapping at least a portion of the at least one text input field;
displaying, on the flexible display, a third screen different from the second screen, based on the at least one virtual keypad overlapping the at least the portion of the at least one text input field;
detecting the movement of the second housing in the second direction in a state in which the third screen is displayed; and
displaying, on the flexible display, a fourth screen including the at least one virtual keypad based on detecting the movement of the second housing in the second direction, wherein the at least one virtual keypad displayed on the fourth screen does not overlap the at least one text input field.

12. The method of claim 11, wherein the third screen includes a screen in which a transparency of the at least one virtual keypad is changed according to a second user input to the at least one virtual keypad.

13. The method of claim 12, further comprising changing the transparency back to a pre-change transparency if the second user input is released.

14. The method of claim 11, wherein the third screen includes a preview window including at least one character to be entered to the at least one text input field according to a third user input to the at least one virtual keypad.

15. The method of claim 11, wherein the third screen includes a guide message indicating that a screen including the at least one text input field overlapped by the at least one virtual keypad is scrollable according to a user input to at least one object included in the at least one keypad.
